# EUROPÄISCHE PATENTSCHRIFT

(11) **EP 2 589 423 B1**
(45) Veröffentlichungstag und Bekanntmachung des Hinweises auf die Patenterteilung: **24.12.2014**
(21) Anmeldenummer: 12171658.3
(22) Anmeldetag: 12.06.2012
(51) Int. Cl.: B01D 46/10, B01D 46/00, F16L 55/24, B01D 35/02

(54) **Filter zum Einsetzen in eine fluidführende Rohrleitung**
Filter for insertion into a fluid-bearing pipe
Filtre destiné à l'utilisation dans une conduite de transport de fluide

(30) Priorität: 04.11.2011 DE 102011085800
(43) Veröffentlichungstag der Anmeldung: 08.05.2013
(73) Patentinhaber: Witzenmann GmbH, 75175 Pforzheim (DE)
(72) Erfinder: Kunzmann, Thomas, 75180 Pforzheim (DE); Reuß, Sebastian, 76307 Karlsbad (DE); Bessler, Frank, 75446 Wiernsheim (DE)
(74) Vertreter: Lemcke, Brommer & Partner Patentanwälte Partnerschaft mbB

(56) Entgegenhaltungen:
- DE-B1- 1 476 748
- FR-A- 1 029 088
- US-A- 4 018 686

## Beschreibung

Die Erfindung betrifft einen Filter zum Einsetzen in eine fluidführende Rohrleitung, insbesondere in eine gasführende Rohrleitung eines Verbrennungsmotors, nach den Oberbegriffen der Ansprüche 1 und 2.

Ein Filter der vorliegenden Art umfasst ein Trägerrohr und ein flächiges Filterelement, durch das hindurch das Fluid geleitet und hierbei gefiltert wird. Das Filterelement ist am Trägerrohr fixiert und überdeckt dessen lichten Innenquerschnitt, so dass das Fluid gezwungen ist, durch das Filterelement hindurch zu fließen.

Ein solcher Filter ist an sich aus der FR 1 029 088 A bekannt. Der dort offenbarte Filter weist ein flächiges Filterelement auf, das die Rohröffnung des Trägerrohrs überdeckt und nach hinten umgelegt ist. Eine Hülse legt das Filterelement zwischen sich und der Außenseite des Trägerrohrs fest.

Dieser bekannte Filter ist zum Einsetzen in einen trichterförmigen Abschnitt einer Flüssigkeitsleitung vorgesehen. Das Filterelement weist wenig Eigenstabilität auf, so dass es für den Einsatz in einer gasführenden Rohrleitung eines Verbrennungsmotors nicht geeignet ist.

Das bevorzugte Anwendungsgebiet eines Filters der vorliegenden Art ist jedoch eine gasführende Rohrleitung eines Verbrennungsmotors, und dort speziell eine Leitung zur Abgasrückführung zur Minderung der Emission von Stickoxiden, die bei der Verbrennung von Kraftstoff in Ottomotoren, Dieselmotoren, Gasturbinen, Heizkesseln usw. entstehen. Dementsprechend hoch sind die thermischen Belastungen in der fluidführenden Rohrleitung, in die das Filterelement mit Trägerrohr eingesetzt werden soll.

Bei der insbesondere in Kraftfahrzeug-Verbrennungsmotoren aufgrund der strengen Abgasvorschriften obligatorischen äußeren Abgasrückführung werden der Abgastrakt und der Ansaugtrakt des Motors durch eine Leitung verbunden. Diese kann im Zylinderkopf verlaufen oder eine separate Leitung außerhalb des Motorblocks sein. Wird der vom Verbrennungsmotor angesaugten Luft auf diese Weise Abgas zugemischt, sinkt die Sauerstoffkonzentration des dem Motor zugeführten Gemischs, was die Verbrennungstemperatur in den Zylindern des Motors senkt. Da die Bildung von Stickoxiden stark temperaturabhängig ist, kann die Stickoxidbildung hierdurch gesenkt werden. Um die Effizienz dieses Vorgangs zu erhöhen, muss das rückgeführte Abgas dem Ansaugtrakt allerdings möglichst kühl zugeführt werden, was durch eine aktive Kühlung des rückgeführten Abgasstroms oder durch eine Entnahme des rückzuführenden Abgases an einem weiter stromabwärts liegenden Punkt der Abgasanlage, an dem die Abgastemperaturen bereits deutlich abgesenkt sind, erfolgen kann.

Insbesondere bei modernen Dieselmotoren ist es üblich, hybride Abgasrückführsysteme einzusetzen, bei denen ein Teil des Abgases motornah zur Rückführung entnommen wird (Hochdruck-Abgasrückführung) und ein Teil stromabwärts des Katalysators bzw. Dieselpartikelfilters entnommen wird (Niederdruck-Abgasrückführung).

Problematisch ist hierbei nun, dass über die Niederdruck-Abgasrückführung Keramikpartikel des Katalysators bzw. Dieselpartikelfilters in den Ansaugtrakt des Motors gelangen können. Ferner können über die Hochdruck-Abgasrückführleitung Rußpartikel in den Ansaugtrakt transportiert werden. Keramikpartikel können an den bewegten Bauteilen des Motors Schäden anrichten, insbesondere am Verdichterrad des üblicherweise vorhandenen Turboladers. Aber auch Rußpartikel im rückgeführten Abgasstrom können einen Turbolader oder sonstige Bauteile, wie einen Kühler für den rückgeführten Abgasstrom, beschädigen, da die Russpartikel als Kondensationskeime wirken und eine Kondensatbildung initiieren. Das ausfallende Kondensat führt dann zu einer sogenannten Verlackung der Bauteile.

In Abgasrückführsystemen von Verbrennungsmotoren ist es daher unverzichtbar, den rückgeführten Abgasstrom zu filtern. Dies geschieht im Stand der Technik mittels eines Filterelementes, das im wesentlichen aus einem Metallvlies und einem Stützgewebe besteht. Insbesondere wegen der thermischen Belastung des Filters ist es dabei nicht unproblematisch, den Filter so in die fluidführende Rohrleitung einzusetzen, dass er dauerhaft und funktionell fixiert ist.

Bisherige Lösungen verwenden hierzu einen Rohrstutzen mit einem Deckel, der mit einem bestimmten Lochbild für den Durchtritt des zu filternden Fluids versehen ist. Hierauf wird das Filterelement positioniert und mittels eines zweiten Deckels fixiert, der ein identisches Lochbild wie der erste Deckel aufweist und fluchtend mit diesem ausgerichtet wird. Zwischen dem ersten und dem zweiten Deckel wird das Filterelement eingeschlossen, so dass das Fluid, das durch die Löcher in den beiden Deckeln fließt, durch das Filterelement hindurchtreten muss und dort gefiltert wird. Der erste und der zweite Deckel werden mittels einer Schweißverbindung aneinander festgelegt.

Die Fertigung eines solchen Filters nach dem Stand der Technik und der Einbau insbesondere in eine Abgasrückführungsleitung eines Verbrennungsmotors sind aufgrund der notwendigen, exakten Ausrichtung der Bauteile zueinander sowie insbesondere aufgrund der notwendigen Verschweißung unvorteilhaft aufwendig. Darüber hinaus erfordert die Schweißbarkeit der Bauteile eine Mindestwandstärke derselben, was die Materialkosten hoch hält. Schließlich ergeben sich beim bevorzugten Anwendungsbereich in einer gasführenden Rohrleitung eines Verbrennungsmotors Probleme durch die hohe thermische Belastung des Filters, denn die Lochbilder der beiden verwendeten Deckel sind, um den Fluidfluss nicht allzu sehr zu behindern, naturgemäß mit sehr schmalen Stegen zwischen den Löchern versehen, die dementsprechend anfällig für Heißrisse sind.

Die vorliegende Erfindung ist nicht auf Filter zur Verwendung in gasführenden Rohrleitungen von Verbrennungsmotoren beschränkt, auch wenn es sich hierbei um die bevorzugte Verwendung handelt und der oben beschriebenen Stand der Technik der Ausgangspunkt für die erfinderischen Überlegungen war. Andere Verwendungen von Filtern zum Einsetzen in fluidführende Rohrleitungen zeigen indes ähnliche Problemstellungen.

Der vorliegenden Erfindung liegt daher die Aufgabe zugrunde, einen Filter zum Einsetzen in eine fluidführende Rohrleitung der eingangs genannten Art vorzuschlagen, der gegenüber dem Stand der Technik unaufwendiger zu fertigen ist.

Gelöst ist diese Aufgabe durch einen Filter mit den Merkmalen des Anspruchs 1 sowie durch einen Filter mit den Merkmalen des Anspruchs 2. Bevorzugte Ausgestaltungen und Weiterbildungen des erfindungsgemäßen Filters sind in den Ansprüchen 3 bis 14 niedergelegt.

Gemäß einer ersten Variante der vorliegenden Erfindung ist das Filterelement auf den Rand der Rohröffnung eines Rohrstutzens des Trägerrohrs aufgesetzt, und das Filterelement wird in Abmessungen verwendet, aufgrund deren es sich radial über den Rand des Rohrstutzens hinaus erstreckt und um den Rand herum nach hinten umgebogen werden kann, so dass es in fertig montiertem Zustand in einem Endbereich des Rohrstutzens an dessen Außenfläche anliegt. Dies kann durch eine Art Tiefziehen des Filterelementes erfolgen.

Das im Rahmen der vorliegenden Erfindung eingesetzte Filterelement kann hierbei, wie im Stand der Technik, ein Filtervlies sein oder aber als Gewebe, Gestricke oder Gewirk, vorzugsweise aus Metalldrähten, ein- oder mehrlagig gefertigt sein. Auch Kombinationen dieser Fertigungsarten und Materialien sind im Rahmen der Erfindung möglich, beispielsweise ein auf ein Metalldrahtgewebe aufgesintertes Metallvlies als Filterelement.

Fixiert wird das Filterelement erfindungsgemäß durch eine Hülse, die auf die Außenfläche des Endbereichs des Rohrstutzens aufsetzbar ist und das Filterelement zwischen sich und dem Endbereich des Rohrstutzens klemmt. Eine solche Hülse kann im Fertigungsprozess mit einer axialen Fügebewegung auf den Rohrstutzen und das darauf aufgelegte und um dessen Rand umgebogene Filterelement aufgesetzt werden, was eine unaufwändige Montierbarkeit des Filters gewährleistet. Der vom Fluid durchströmte Querschnitt des erfindungsgemäßen Filters ist somit nur vom Filterelement überdeckt, jedoch nicht von irgendwelchen Bauteilen, die das Filterelement fixieren; insbesondere ist kein Deckel mit einem Lochbild mehr vorhanden, so dass sich das Problem von bei thermischer Belastung instabilen Stäben zwischen den Löchern des Lochbilds erledigt hat.

Die Klemmung zwischen dem Endbereich des Rohrstutzens und der Hülse, die das Filterelement zwischen sich aufnehmen, sorgt ferner dafür, dass eine Schweißverbindung zwischen den einzelnen Bauteilen des erfindungsgemäßen Filters in der Regel überflüssig ist. Es ist im Rahmen der vorliegenden Erfindung zwar nicht ausgeschlossen, dass zusätzliche Schweißverbindungen, insbesondere zwischen der Hülse und dem Rohrstutzen vorhanden sein können, jedoch bietet die erfindungsgemäße klemmende Verbindung dann besondere Vorteile, wenn auf einen Schweißprozess gänzlich verzichtet werden kann. Durch die erfindungsgemäße Klemmung entsteht keine Wärmeeinflusszone am Filter, die beim bevorzugten Anwendungsbereich in einer Leitung zur Abgasrückführung eines Verbrennungsmotors nachteilig wirken und sogar zum Ausfall des Filters führen könnte.

Nach einer zweiten Variante der vorliegenden Erfindung überdeckt das Filterelement die Rohröffnung des Rohrstutzens, indem es von innen an den Rand der Rohröffnung angesetzt und randseitig so nach hinten umgelegt ist, dass es im Endbereich des Rohrstutzens an dessen Innenfläche anliegt. Die Fixierung des Filterelements an der Innenfläche des Endbereichs des Rohrstutzens erfolgt dann mittels einer an die Innenfläche des Endbereichs ansetzbaren und das Filterelement zwischen sich und dem Endbereich klemmenden Hülse. Auch gemäß dieser zweiten Variante der vorliegenden Erfindung reicht es aus, eine axiale Fügebewegung des Filterelements und der Hülse in das Innere des Rohrstutzens hinein auszuführen, um die Bauteile aneinander festzulegen.

Je nachdem, in welcher Richtung das Medium durch den erfindungsgemäßen Filter strömt, bietet die erste Variante, bei der die Hülse auf den Rohrstutzen aufgesetzt wird, oder die zweite Variante, bei der die Hülse in den Rohrstutzen eingesetzt wird, Vorteile für die Selbsthemmung der Verbindung.

An dieser Stelle sei darauf hingewiesen, dass die fluidführende Rohrleitung, und somit auch der erfindungsgemäße Filter, nicht in jedem Fall zylindrisch ausgebildet bzw. mit einem kreisrunden Querschnitt versehen sein muss. Es sind vielmehr auch andere Querschnittsformen, wie polygonale, ovale, stadionförmige und dergleichen von der vorliegenden Erfindung umfasst.

Bei beiden Varianten der vorliegenden Erfindung wird die Klemmung zwischen der Hülse und dem Endbereich des Rohrstutzens vorzugsweise dadurch bewirkt, dass der Endbereich des Rohrstutzens und/oder die Hülse konisch geformt sind; gleichzeitig weisen diese beiden Teile unterschiedliche Neigungswinkel gegenüber der Achse des Rohrstutzens auf.

Bei der ersten Variante der Erfindung, bei der die Hülse außen auf dem Endbereich des Rohrstutzens sitzt, sollte der Neigungswinkel der Hülse kleiner sein als der Neigungswinkel des Endbereichs des Rohrstutzens, um die erwünschte selbsthemmende Klemmwirkung zu erzielen. Hierbei ist der Neigungswinkel der Hülse vorzugsweise etwa gleich Null, deren Innenfläche verläuft also axial, während der Endbereich des Rohrstutzens mit einem Neigungswinkel größer Null konisch geformt ist.

Bei der zweiten Variante der Erfindung sollte der Neigungswinkel der Hülse größer sein als der Neigungswinkel des Endbereichs des Rohrstutzens, wobei hier bevorzugt der Neigungswinkel des Endbereichs des Rohrstutzens etwa gleich Null ist, dessen Innenfläche also vorzugsweise axial verläuft. Die Konizität der Hülse bewirkt dann die selbsthemmende Klemmung im Inneren des Rohrstutzens.

Da die Konizität bzw. die unterschiedlichen Neigungswinkel der beiden beteiligten Bauteile über deren Umfang hinweg besteht, bewirkt die erfindungsgemäße Klemmung entsprechende Umfangskräfte als Gegenkräfte, was den festen Sitz der beteiligten Bauteile untereinander sicherstellt, auch ohne die Bauteile mittels Verschweißen aneinander fixieren zu müssen. Es kann sogar nahezu unmöglich werden, das Filterelement zerstörungsfrei aus der erfindungsgemäßen Verbindung zu lösen.

Da die Herstellung einer klemmenden Verbindung hohe axiale Fügekräfte erfordert, ist erfindungsgemäß der Rand des Rohrstutzens nach innen umgebogen, so dass er einen Radius zum Anlegen des Filterelements bildet, das Filterelement am Rand des Rohrstutzens also nicht geknickt wird bzw. über eine Kante hinweg verläuft. Insbesondere bei einem Fügeprozess, bei dem die Hülse nach der ersten Variante der vorliegenden Erfindung von außen auf den Rohrstutzen mit aufgelegtem Filterelement aufgeschoben wird, verhindert dieser Radius des Randes eine Beschädigung des Filterelements beim Fügen. Der Radius ist hierbei bevorzugt so ausgestaltet, dass der Rand des Rohrstutzens so weit nach innen umgebogen ist, dass er radial zur Achse des Rohrstutzens hin zeigt.

Gemäß der vorliegenden Erfindung ist auch die Hülse im Bereich des Randes des Rohrstutzens nach innen umgebogen und bildet einen entsprechenden Radius zum Einlegen des Filterelements. Zweckmäßigerweise sind die Radien des Rohrstutzens und der Hülse, soweit beide Bauteile einen solchen aufweisen, so aufeinander abgestimmt, dass sie das Filterelement weitgehend zwängungs- und klemmungsfrei zwischen sich einschließen. Die Klemmung erfolgt dann hinter dem Radius zwischen der Hülse und dem sich an den Radius anschließenden Endbereich des Rohrstutzens, wobei vorzugsweise eines dieser beiden Bauteile konisch ausgebildet ist, um die Klemmung zu bewirken. Vorteilhaft ist hierbei ferner,

dass die Spannung des Filterelements durch die Fügebewegungen der Montage unterstützt wird.

Die Stabilität des zusammengebauten Zustands des Filters kann bevorzugt noch dadurch erhöht werden, dass die Hülse aus einem Material mit anderen Wärmeausdehnungseigenschaften als das Material des Rohrstutzens gefertigt wird. Bei der ersten Variante der vorliegenden Erfindung ist es vorteilhaft, wenn sich die Hülse mit zunehmender Erwärmung weniger ausdehnt als der Rohrstutzen. Bei der zweiten Variante der vorliegenden Erfindung werden die Materialien zweckmäßigerweise so gewählt, dass sich die Hülse mit zunehmender Erwärmung mehr ausdehnt als der Rohrstutzen. Diese Materialpaarungen haben zur Folge, dass die Klemmkraft zwischen der Hülse und dem Endbereich des Rohrstutzens bei beiden Varianten der Erfindung umso höher wirkt, je mehr sich der Filter erwärmt.

Das Filterelement kann, wie erwähnt, als ein- oder mehrlagiges Gewebe, Gestricke oder Gewirke aus Metalldrähten, oder als Metallvlies, oder aber als eine Kombination aus unterschiedlichen Lagen der genannten Materialien gefertigt sein. Zusätzlich kann ein flächiges Filtermaterial auf ein dünnes Schutzgitter aus Metall, insbesondere ein Lochblech, aufgebracht und durch dieses stabilisiert sein. Gegebenenfalls vorhandene offene Drahtenden des Filterelements werden durch die erfindungsgemäße Verpressung bzw. Klemmung eingebunden, so dass sie sich jedenfalls nicht auf der Abgangsseite bzw. der stromabwärtigen Seite des Filters befinden. Dies trägt zur sogenannten technischen Sauberkeit des erfindungsgemäßen Filters bei.

Je ein Ausführungsbeispiel für die beiden Varianten eines erfindungsgemäßen Filters wird im Folgenden anhand der beigefügten Zeichnungen beschrieben und erläutert. Es zeigen:
- Figur 1: eine schematische seitliche Schnittdarstellung eines Filters, der gemäß der ersten Variante der vorliegenden Erfindung ausgestaltet ist;
- Figur 2: das Detail X aus Figur 1;
- Figur 3: eine schematische seitliche Schnittdarstellung eines Filters, der nach der zweiten Variante der Erfindung ausgestaltet ist;
- Figur 4: das Detail Y aus Figur 3.

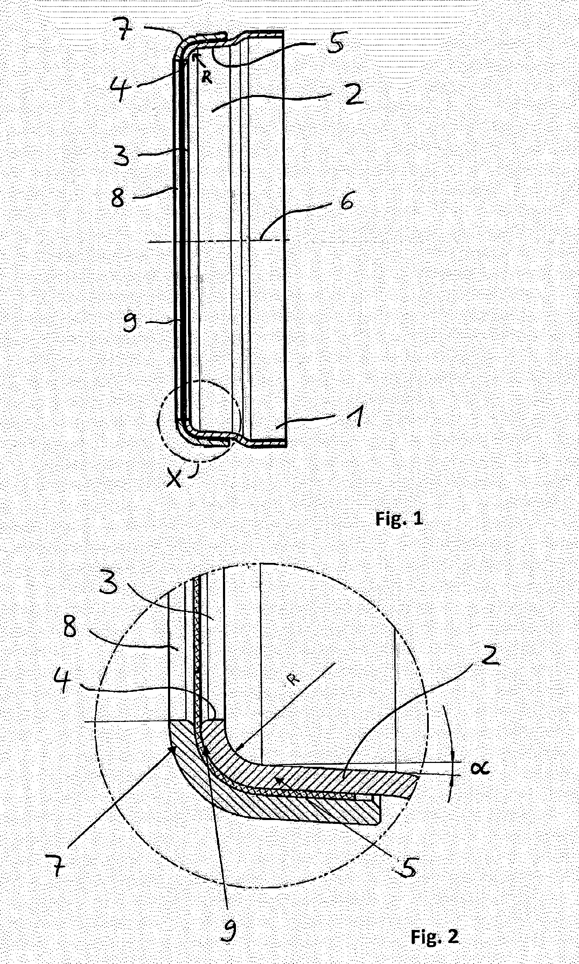

In Figur 1 ist in einer schematischen seitlichen Darstellung ein Schnitt durch ein Ausführungsbeispiel eines Filters gezeigt, der gemäß der ersten Variante der vorliegenden Erfindung ausgestaltet ist. Dieser Filter umfasst ein Trägerrohr 1 mit einem Rohrstutzen 2. Eine Rohröffnung 3 des Rohrstutzens 2 wird von einem Rand 4 umschrieben, der nach innen umgebogen ist und radial zu einer Achse 6 des Rohrstutzens 2 hin weist. Durch das Nach-Innen-Umbiegen des Randes 4 hat sich ein in Figur 2 besser erkennbarer Radius R gebildet, an den sich ein Endbereich 5 des Rohrstutzens 2 anschließt. Dieser Endbereich ist konisch geformt und bildet einen Winkel α zur Achse 5 des Rohrstutzens 2, wie in Figur 2 zu erkennen ist.

Auf den Endbereich 5 des Rohrstutzens 2 ist eine Hülse 7 aufgesetzt. Diese Hülse ist stirnseitig mit einer Öffnung 8 versehen, welche im Wesentlichen dem lichten Innenquerschnitt des Rohrstutzens 2 entspricht, so dass (nicht dargestelltes) Fluid durch die Hülse 7 hindurchströmen kann. Die Hülse 7 weist ebenfalls einen Radius auf, der einen parallelen Verlauf zum Radius R des Endbereichs 5 des Rohrstutzens 2 ermöglicht, und in ihrem anschließenden Verlauf ist die Hülse 7 in ihrem Ausgangszustand axial geformt, also mit einem Winkel α = 0 zur Achse 6 des Rohrstutzens 2 versehen. Im hier dargestellten zusammengebauten Zustand verläuft auch die Hülse 7 konisch, da sie sich beim Aufschieben auf den konischen Endbereich 5 des Rohrstutzens 2 zwangsweise aufgeweitet hat.

Wie Figur 2 besser verdeutlicht, ist zwischen der Hülse 7 und dem Rand 4, dem Radius R und dem Endbereich 5 des Rohrstutzens 2 ein Metallgewebe 9 fixiert, das die Öffnung 8 der Hülse 7 und insbesondere die Rohröffnung 3 des Rohrstutzens 2 ganzflächig überdeckt. Das Metallgewebe 9 überdeckt hierbei nicht nur die Rohröffnung 3 des Rohrstutzens 2, sondern steht radial über dessen Rand 4 über und ist um dessen Radius R herum nach hinten umgebogen, so dass es an der Außenfläche des Endbereichs 5 des Rohrstutzens 2 anliegt. Dort wird es durch die Hülse 7 fixiert, da diese radial klemmend auf dem Endbereich 5 des Rohrstutzens 2 sitzt. Insbesondere der Radius R des Endbereichs 5 des Rohrstutzens 2 bewirkt beim Aufsetzen der Hülse 7, dass das Metallgewebe 9 nicht beschädigt wird, auch nicht, wenn beim Aufweiten der ursprünglich axial verlaufenden Hülse 7 hohe Klemmkräfte zwischen der Hülse 7 und dem Endbereich 5 des Rohrstutzens 2 und somit hohe Fügekräfte entstehen. Das Metallgewebe 9 wird vielmehr am Radius R sanft nach hinten umgelegt, ohne abzuknicken, und wird von diesem gestützt. Im Endbereich 5 des Rohrstutzens 2 wird das Metallgewebe 9 dann geklemmt und hierdurch fixiert.

Der in den Figuren 1 und 2 dargestellte Filter ist zum Einsetzen in eine zylindrische Rohrleitung für die Abgasrückführung eines Verbrennungsmotors konzipiert. Dementsprechend ist auch das Trägerrohr 1 im Wesentlichen zylindrisch ausgebildet, und die Hülse 7 bildet einen Ring mit kreisrunder Öffnung 8. Wie bereits erwähnt, sind jedoch auch andere Formen, insbesondere andere Querschnittsformen im Rahmen der vorliegenden Erfindung möglich.

Entsprechend dem für das vorliegende Ausführungsbeispiel vorgesehenen Einsatzgebiet bestehen sowohl das Trägerrohr 1 bzw. der Rohrstutzen 2 als auch die Hülse 7 aus Edelstahl, um der gegebenen Wärmebelastung sowie eventuellen Korrosionsangriffen des durchgeleiteten Fluids Stand halten zu können. Da jedoch keine Schweißverbindung zwischen der Hülse 7 und dem Rohrstutzen 2 hergestellt werden muss und sich die Klemmverbindung selbst sichert, kann der Rohrstutzen 2 vorteilhaft dünnwandig ausgebildet sein, was Kostenvorteile durch die Materialersparnis sowie Gewichtsvorteile mit sich bringt.

Wie insbesondere Figur 2 verdeutlicht, kann nicht nur das Aufsetzen der radial klemmenden Hülse 7 auf den Rohrstutzen 2 und das Fixieren dieser beiden Teile aneinander durch einfaches axiales Aufschieben der Hülse 7 auf den Rohrstutzen 2 bewirkt werden; sondern darüber hinaus kann gleichzeitig die Umformung des Metallgewebes 9, das vorliegend als tiefziehbares Metallgewebe mit aufgesintertem Metallvlies ausgebildet ist, um den Rand 4 und den Radius R des Rohrstutzens 2 herum sowie das Anlegen an die Außenseite des Endbereichs 6 durch axiales Aufschieben der Hülse 7 bewirkt werden. Um die dargestellte Baueinheit zu fertigen, muss es also lediglich ein Filterelement, das größere Abmessungen aufweist als die Rohröffnung 3 des Rohrstutzens 2, auf den Rand 4 und den Radius R des Rohrstutzens 2 aufgelegt und dann die Hülse 7 mit einer axialen Bewegung auf den Rohrstutzen 2 aufgeschoben werden. Ein Ausrichten der Bauteile zueinander sowie ein weiterer Befestigungsschritt, insbesondere ein Verschweißen, erübrigen sich. Gleichzeitig können alle möglichen Arten von Filterelementen verwendet werden.

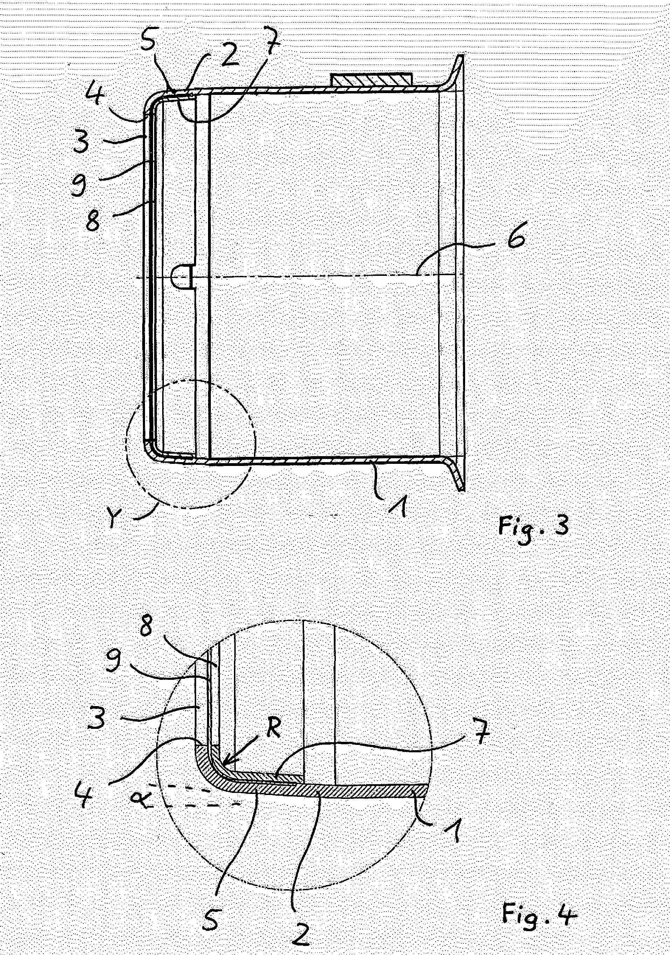

Die Figur 3 zeigt, entsprechend Figur 1, in einer schematischen seitlichen Darstellung einen Schnitt durch ein Ausführungsbeispiel eines Filters, der gemäß der zweiten Variante der vorliegenden Erfindung ausgestaltet ist. Auch dieser Filter umfasst ein Trägerrohr 1 mit einem Rohrstutzen 2. Eine Rohröffnung 3 des Rohrstutzens 2 wird von einem Rand 4 umschrieben, der seinerseits einen Endbereich 5 des Rohrstutzens 2 begrenzt.

Der Rohrstutzen 2 ist ganz ähnlich wie der Rohrstutzen 2 des ersten Ausführungsbeispiels nach den Figuren 1 und 2 ausgebildet, denn auch hier ist der Rand 4 nach innen zu einer Achse 6 hin gebogen, so dass er radial nach innen weist. Ein Radius R bildet den Übergang zwischen dem Rand 4 und dem eigentlichen Endbereich 5 des Rohrstutzens 2, der auch hier konisch geformt ist, also einen Winkel α gegen die Achse 6 einschließt.

Im Unterschied zum ersten Ausführungsbeispiel nach den Figuren 1 und 2 ist hier ein Metallgewebe 9 als Filterelement von innen an den Rand 4 des Rohrstutzens 2 angelegt; es verläuft im Inneren des Rohrstutzens 2 entlang des Radius R und legt sich an der Innenseite des eigentlichen Endbereichs 5 des Rohrstutzens 2 an.

Wie Figur 4, eine Detailvergrößerung des Details Y aus Figur 3 besser verdeutlicht, ist eine Hülse 7 im Inneren des Trägerrohrs 1 bis in den Rohrstutzen 2 eingeführt worden. Es sitzt klemmend im konisch ausgeformten Endbereich 5 des Rohrstutzens 2, da es ebenfalls konisch ausgebildet ist und hierbei einen Winkel zur Achse 6 des Rohrstutzens 2 einnimmt, der größer ist als der Winkel α der konischen Formung des Rohrstutzens 2. Aufgrund dieser Klemmung wird das Metallgewebe 9 fixiert, und die Hülse 7 sichert sich im Rohrstutzen 2 selbst. Um eine Beschädigung des Metallvlieses 9 bei der axialen Fügebewegung zu vermeiden, weist auch die Hülse 7 einen Radius auf, der sich bis zur kreisrunden Öffnung 8 der Hülse 7 erstreckt und bewirkt, dass auch der Rand dieser Öffnung 8 radial nach innen zur Achse 6 zeigt.

Das Metallvlies 9 kann mit der Hülse 7 zusammen in das Trägerrohr 1 eingeschoben werden, wodurch es sich um den Radius der Hülse 7 nach hinten umbiegt und mit der Hülse 7 bis zum Endbereich 5 des Rohrstutzens 2 bewegt wird. Dort wird das Metallgewebe 9 aufgrund der Klemmung zwischen dem konisch ausgebildeten Endbereich 5 des Rohrstutzens 2 und dem mit größerem Öffnungswinkel konisch ausgebildeten Bereich der Hülse 7 fixiert.

Wie der Fachmann erkennen wird, ist die Anwendung der vorliegenden Erfindung nicht auf das Einsatzgebiet in fluidführenden Rohrleitungen von Verbrennungsmotoren, und insbesondere nicht auf eine Verwendung in Abgasrückführungs-Leitungen beschränkt. Die Erfindung kann vielmehr überall da zum Einsatz kommen, wo Flüssigkeiten und/oder Gase durch eine Rohrleitung geleitet und innerhalb dieser Rohrleitung gefiltert werden müssen.

## Patentansprüche

1. Filter zum Einsetzen in eine fluidführende Rohrleitung, insbesondere in eine gasführende Rohrleitung eines Verbrennungsmotors, umfassend ein Trägerrohr (1) und ein flächiges Filterelement (9), das am Trägerrohr (1) fixiert ist und dessen lichten Innenquerschnitt überdeckt, wobei das Trägerrohr (1) einen Rohrstutzen (2) mit einem Endbereich (5), einem den Endbereich (5) abschließenden Rand (4) und eine vom Rand (4) umschriebene Rohröffnung (3) aufweist, wobei das Filterelement (9) die Rohröffnung (3) des Rohrstutzens (2) überdeckt, indem es auf den Rand (4) der Rohröffnung (3) aufgesetzt ist, sich radial über den Rand (4) hinaus erstreckt und nach hinten umgebogen ist, so dass es im Endbereich (5) des Rohrstutzens (2) an dessen Außenfläche anliegt, und wobei eine auf die Außenfläche des Endbereichs (5) des Rohrstutzens (2) aufsetzbare und das Filterelement (9) zwischen sich und dem Endbereich (5) des Rohrstutzens (2) klemmende Hülse (7) vorgesehen ist,
**dadurch gekennzeichnet,**
**dass** der Rand (4) des Rohrstutzens (2) nach innen umgebogen ist, so dass ein Radius (R) zum Anlegen des Filterelements (9) gebildet ist, und dass die Hülse (7) im Bereich des Randes (4) des Rohrstutzens nach innen umgebogen ist, so dass ein Radius zum Anlegen des Filterelements (9) gebildet ist.

2. Filter zum Einsetzen in eine fluidführende Rohrleitung, insbesondere in eine gasführende Rohrleitung eines Verbrennungsmotors, umfassend ein Trägerrohr (1) und ein flächiges Filterelement (9), das am Trägerrohr (1) fixiert ist und dessen lichten Innenquerschnitt überdeckt, wobei das Trägerrohr (1) einen Rohrstutzen (2) mit einem Endbereich (5), einem den Endbereich (5) abschließenden Rand (4) und eine vom Rand (4) umschriebene Rohröffnung (3) aufweist,
**dadurch gekennzeichnet,**
**dass** das Filterelement (9) die Rohröffnung (3) des Rohrstutzens (2) überdeckt, indem es von innen an den Rand (4) der Rohröffnung (3) angrenzt und randseitig nach hinten umgebogen ist, so dass es im Endbereich (5) des Rohrstutzens (2) an dessen Innenfläche anliegt, dass eine an die Innenfläche des Endbereichs (5) des Rohrstutzens (2) ansetzbare und das Filterelement (9) zwischen sich und dem Endbereich (5) des Rohrstutzens (2) klemmende Hülse (7) vorgesehen ist, dass der Rand (4) des Rohrstutzens (2) nach innen umgebogen ist, so dass ein Radius (R) zum Anlegen des Filterelements (9) gebildet ist, und dass die Hülse (7) im Bereich des Randes (4) des Rohrstutzens nach innen umgebogen ist, so dass ein Radius zum Anlegen des Filterelements (9) gebildet ist.

3. Filter nach einem der Ansprüche 1 oder 2,
**dadurch gekennzeichnet,**
**dass** der Endbereich (5) des Rohrstutzens (2) und/oder die Hülse (7) konisch geformt sind und unterschiedliche Neigungswinkel (α) gegenüber einer Achse (6) des Rohrstutzens (2) aufweisen.

4. Filter nach den Ansprüchen 1 und 3,
**dadurch gekennzeichnet,**
**dass** der Neigungswinkel der Hülse (7) kleiner als der Neigungswinkel (α) des Endbereichs (5) des Rohrstutzens (2) ist.

5. Filter nach Anspruch 4,
**dadurch gekennzeichnet,**
**dass** der Neigungswinkel der Hülse (7) etwa gleich Null ist.

6. Filter nach den Ansprüchen 2 und 3,
**dadurch gekennzeichnet,**
**dass** der Neigungswinkel der Hülse (7) größer ist als der Neigungswinkel (α) des Endbereichs (5) des Rohrstutzens (2).

7. Filter nach Anspruch 6,
**dadurch gekennzeichnet,**
**dass** der Neigungswinkel des Endbereichs (5) des Rohrstutzens (2) etwa gleich Null ist.

8. Filter nach mindestens einem der Ansprüche 1 bis 7,
**dadurch gekennzeichnet,**
**dass** die Radien des Rohrstutzens (2) und der Hülse (7) so aufeinander abgestimmt sind, dass sie das Filterelement (9) weitgehend zwängungsfrei zwischen sich einschließen.

9. Filter nach mindestens einem der Ansprüche 1 bis 8,
**dadurch gekennzeichnet,**
**dass** die Hülse (7) aus einem Material mit anderen Wärmeausdehnungseigenschaften als das Material des Rohrstutzens (2) besteht.

10. Filter nach mindestens einem der Ansprüche 1 bis 9,
**dadurch gekennzeichnet,**
**dass** das Filterelement (9) im Wesentlichen aus einem Metallvlies besteht.

11. Filter nach Anspruch 10,
**dadurch gekennzeichnet,**
**dass** das Filterelement (9) mindestens eine Lage mit einem Stützgewebe oder Stützgestricke für das Metallvlies aufweist.

12. Filter nach mindestens einem der Ansprüche 1 bis 11,
**dadurch gekennzeichnet,**
**dass** das Filterelement (9) ein- oder mehrlagig als Gewebe, Gestricke und/oder Gewirk, vorzugsweise aus Metalldrähten gefertigt ist.

13. Filter nach mindestens einem der Ansprüche 1 bis 12,
**dadurch gekennzeichnet,**
**dass** das Filterelement (9) auf einem Stützgitter aus Metall, insbesondere einem Lochblech sitzt.

14. Filter nach mindestens einem der Ansprüche 1 bis 13,
**dadurch gekennzeichnet,**
**dass** das Trägerrohr (1) und die Hülse (7) aus Metall bestehen und dass der Filter zum Einbau in ein Abgas-Rückführungssystem eines Verbrennungsmotors vorgesehen ist.

## Claims

1. Filter for insertion into a fluid-conducting pipeline, especially into a gas-conducting pipeline of an internal combustion engine, comprising a carrier pipe (1) and a planar filter element (9) which is fixed to the carrier pipe (1) and covers the clear internal cross-section thereof, the carrier pipe (1) having a pipe neck (2) with an end region (5), a rim (4) that terminates the end region (5), and a pipe opening (3) circumscribed by the rim (4), wherein the filter element (9) covers the pipe opening (3) of the pipe neck (2) by being mounted on the rim (4) of the pipe opening (3), extending radially beyond the rim (4) and being bent towards the rear so that in the end region (5) of the pipe neck (2) it rests against the outer face thereof, and wherein a sleeve (7) is provided which is arranged to be mounted on the outer face of the end region (5) of the pipe neck (2) and clamps the filter element (9) between itself and the end region (5) of the pipe neck (2),
**characterised in that**
the rim (4) of the pipe neck (2) is bent inwards so as to form a curved portion (R) for application of the filter element (9), and the sleeve (7) is bent inwards in the region of the rim (4) of the pipe neck so as to form a curved portion for application of the filter element (9).

2. Filter for insertion into a fluid-conducting pipeline, especially into a gas-conducting pipeline of an internal combustion engine, comprising a carrier pipe (1) and a planar filter element (9) which is fixed to the carrier pipe (1) and covers the clear internal cross-section thereof, the carrier pipe (1) having a pipe neck (2) with an end region (5), a rim (4) that terminates the end region (5), and a pipe opening (3) circumscribed by the rim (4),
**characterised in that**
the filter element (9) covers the pipe opening (3) of the pipe neck (2) by abutting the rim (4) of the pipe opening (3) on the inside and being bent towards the rear on the rim side so that in the end region (5) of the pipe neck (2) it rests against the inner face thereof; a sleeve (7) is provided which is arranged to be mounted on the inner face of the end region (5) of the pipe neck (2) and clamps the filter element (9) between itself and the end region (5) of the pipe neck (2); the rim (4) of the pipe neck (2) is bent inwards so as to form a curved portion (R) for application of the filter element (9), and the sleeve (7) is bent inwards in the region of the rim (4) of the pipe neck so as to form a curved portion for application of the filter element (9).

3. Filter according to either one of claims 1 and 2,
**characterised in that**
the end region (5) of the pipe neck (2) and/or the sleeve (7) are conical in shape and have different angles of inclination (α) with respect to an axis (6) of the pipe neck (2).

4. Filter according to claims 1 and 3,
**characterised in that**
the angle of inclination of the sleeve (7) is smaller than the angle of inclination (α) of the end region (5) of the pipe neck (2).

5. Filter according to claim 4,
**characterised in that**
the angle of inclination of the sleeve (7) is approximately equal to zero.

6. Filter according to claims 2 and 3,
**characterised in that**
the angle of inclination of the sleeve (7) is greater than the angle of inclination (α) of the end region (5) of the pipe neck (2).

7. Filter according to claim 6,
**characterised in that**
the angle of inclination of the end region (5) of the pipe neck (2) is approximately equal to zero.

8. Filter according to at least one of claims 1 to 7,
**characterised in that**
the curved portions of the pipe neck (2) and the sleeve (7) are matched to one another so that they enclose the filter element (9) between them substantially without constraint.

9. Filter according to at least one of claims 1 to 8,
**characterised in that**
the sleeve (7) consists of a material having thermal expansion properties different from those of the material of the pipe neck (2).

10. Filter according to at least one of claims 1 to 9,
**characterised in that**
the filter element (9) consists substantially of a non-woven metal fabric.

11. Filter according to claim 10,
**characterised in that**
the filter element (9) has at least one layer having a woven support material or knitted support material for the non-woven metal fabric.

12. Filter according to at least one of claims 1 to 11,
**characterised in that**
the filter element (9) is of single-layered or multi-layered construction in the form of a woven material, weft-knitted material and/or warp-knitted material, preferably made of metal wires.

13. Filter according to at least one of claims 1 to 12,
**characterised in that**
the filter element (9) is seated on a support grid made of metal, especially a perforated metal sheet.

14. Filter according to any one of claims 1 to 13,
**characterised in that**
the carrier pipe (1) and the sleeve (7) consist of metal and the filter is intended for installation in an exhaust gas return system of an internal combustion engine.

## Revendications

1. Filtre destiné à être utilisé dans une conduite de transport de fluide, en particulier dans une conduite de transport de gaz d'un moteur à combustion, comprenant un tube support (1) et un élément filtrant plan (9) qui est fixé au tube support (1) et qui recouvre sa section transversale intérieure libre, le tube support (1) présentant un embout de tube (2) avec une zone terminale (5), un bord (4) terminant la zone terminale (5) et une ouverture de tube (3) circonscrite par le bord (4), l'élément filtrant (9) recouvrant l'ouverture de tube (3) de l'embout de tube (2) par le fait qu'il est positionné sur le bord (4) de l'ouverture de tube (3), s'étend radialement au-delà du bord (4) et est replié vers l'arrière, de sorte qu'il est appliqué sur la surface extérieure de l'embout de tube (2) dans sa zone terminale (5), et une douille (7) pouvant être positionnée sur la surface extérieure de la zone terminale (5) de l'embout de tube (2) et serrant l'élément filtrant (9) entre elle et la zone terminale (5) de l'embout de tube (2) étant prévue,
**caractérisé en ce**
**que** le bord (4) de l'embout de tube (2) est replié vers l'intérieur de façon à former un arrondi (R) pour l'application de l'élément filtrant (9) et que la douille (7) est repliée vers l'intérieur dans la zone du bord (4) de l'embout de tube de façon à former un arrondi pour l'application de l'élément filtrant (9).

2. Filtre destiné à être utilisé dans une conduite de transport de fluide, en particulier dans une conduite de transport de gaz d'un moteur à combustion, comprenant un tube support (1) et un élément filtrant plan (9) qui est fixé au tube support (1) et qui recouvre sa section transversale intérieure libre, le tube support (1) présentant un embout de tube (2) avec une zone terminale (5), un bord (4) terminant la zone terminale (5) et une ouverture de tube (3) circonscrite par le bord (4),
**caractérisé en ce**
**que** l'élément filtrant (9) recouvre l'ouverture de tube (3) de l'embout de tube (2) par le fait qu'il est adjacent par l'intérieur au bord (4) de l'ouverture de tube (3) et replié vers l'arrière du côté du bord, de sorte qu'il est appliqué sur la surface intérieure de l'embout de tube (2) dans sa zone terminale (5), qu'une douille (7) pouvant être appliquée sur la surface intérieure de la zone terminale (5) de l'embout de tube (2) et serrant l'élément filtrant (9) entre elle et la zone terminale (5) de l'embout de tube (2) est prévue, que le bord (4) de l'embout de tube (2) est replié vers l'intérieur de façon à former un arrondi (R) pour l'application de l'élément filtrant (9), et que la douille (7) est repliée vers l'intérieur dans la zone du bord (4) de l'embout de tube de façon à former un arrondi pour l'application de l'élément filtrant (9).

3. Filtre selon l'une des revendications 1 ou 2,
**caractérisé en ce**
**que** la zone terminale (5) de l'embout de tube (2) et/ou la douille (7) sont de forme conique et présentent des angles d'inclinaison (α) différents par rapport à un axe (6) de l'embout de tube (2).

4. Filtre selon les revendications 1 et 3,
**caractérisé en ce**
**que** l'angle d'inclinaison de la douille (7) est plus petit que l'angle d'inclinaison (α) de la zone terminale (5) de l'embout de tube (2).

5. Filtre selon la revendication 4,
**caractérisé en ce**
**que** l'angle d'inclinaison de la douille (7) est à peu près égal à zéro.

6. Filtre selon les revendications 2 et 3,
**caractérisé en ce**
**que** l'angle d'inclinaison de la douille (7) est plus grand que l'angle d'inclinaison (α) de la zone terminale (5) de l'embout de tube (2).

7. Filtre selon la revendication 6,
**caractérisé en ce**
**que** l'angle d'inclinaison de la zone terminale (5) de l'embout de tube (2) est à peu près égal à zéro.

8. Filtre selon au moins l'une des revendications 1 à 7,
**caractérisé en ce**
**que** les arrondis de l'embout de tube (2) et de la douille (7) sont adaptés l'un à l'autre de façon à inclure l'élément filtrant (9) entre eux en grande partie sans contrainte.

9. Filtre selon au moins l'une des revendications 1 à 8,
**caractérisé en ce**
**que** la douille (7) est constituée d'un matériau possédant d'autres propriétés de dilatation thermique que le matériau de l'embout de tube (2).

10. Filtre selon au moins l'une des revendications 1 à 9,
**caractérisé en ce**
**que** l'élément filtrant (9) est essentiellement constitué d'un non-tissé métallique.

11. Filtre selon la revendication 10,
**caractérisé en ce**
**que** l'élément filtrant (9) présente au moins une couche avec un tissu support ou un tricot support pour le non-tissé métallique.

12. Filtre selon au moins l'une des revendications 1 à 11,
**caractérisé en ce**
**que** l'élément filtrant (9) est réalisé en une ou plusieurs couches sous la forme d'un tissu, d'un tricot trame et/ou d'un tricot chaîne, de préférence à partir de fils métalliques.

13. Filtre selon au moins l'une des revendications 1 à 12,
**caractérisé en ce**
**que** l'élément filtrant (9) est placé sur une grille de support en métal, en particulier une tôle perforée.

14. Filtre selon au moins l'une des revendications 1 à 13,
**caractérisé en ce**
**que** le tube support (1) et la douille (7) sont en métal et que le filtre est prévu pour être monté dans un système de recyclage des gaz d'échappement d'un moteur à combustion.
